# EUROPEAN PATENT APPLICATION

(11) **EP 4 776 081 A1**
(43) Date of publication of application: **15.07.2026**
(21) Application number: 25206749.1
(22) Date of filing: 06.10.2025
(51) Int. Cl.: G04B 19/02, G04B 19/04, G04B 19/06, G04B 19/08, G04B 19/20

(54) **DIAL MODULE AND INSTRUMENT EQUIPPED THEREWITH**

(30) Priority: 14.01.2025 BE 202505036
(71) Applicant: Mintiens, Benoît, 2650 Edegem (BE)
(72) Inventor: Mintiens, Benoît, 2650 Edegem (BE)
(74) Representative: Oryon NV

(57) **Abstract**

Dial module comprising a dial (3) which is constructed from a primary disk (6) with a primary ring (7), whereby in the primary disk (6) an opening (8) is applied, whereby in the opening (8) a secondary disk (9) with secondary ring (10) is applied, whereby the disks (6, 9) that serve as hands and the rings (7, 10) are provided with a scale indication (12), whereby the disks (6, 7) and rings (9, 10) are situated in one continuous surface (13), characterised in that the outer edges (14) of the disks (6, 9), inner edge (14) of the primary ring (7), inner and outer edge (14) of the secondary ring (10) and edge (14) of the opening (8) in the primary disk (6) are provided with a groove (15) and whereby small balls (16) are applied between the rings (7,10) and disks (6,9) on the level of the grooves (15) to form bearings.

## Description

The present invention relates to a dial module.

In particular, the invention is intended for dial modules of watches, but it is not excluded that the dial module according to the invention can be used in other applications, instruments or devices, such as cars or other vehicles for example.

Indeed, the dial module can be used for the indication of speed, revolutions, air pressure, humidity and other parameters in watches, wrist watches, cars, motorcycles, vessels, machines and the like.

Traditionally, the dial module comprises one or several hands which move relative to a scale, for example a time scale, speed scale and the like, which is provided on a dial whereby the hands are driven by a mechanism, for example a timepiece mechanism.

Two major categories can be distinguished for mechanical timepieces or watches with analogue reading.

A first and best known category is that of the classic timepiece with a dial and needle-shaped hands that are rotated around a shaft by the timepiece mechanism.

A second and lesser known category is the one with rotating disks or rings with inscription. The disks or rings are provided with figures that correspond to the time function of the ring, being the digits from 1 to 12 for an hour ring, 1 to 60 for a minute ring and seconds ring and are placed directly on the drive shafts of the timepiece mechanism and replace the hands. A fixed reference or window on the watch indicates the reading indication or dashes with the digits on the outer fixed ring.

The first category of classic timepieces with hand and dial has the advantage that it is sufficient to take a quick glance to know the time without having to read in detail which digits the hands point to.

A disadvantage of said category is that it mechanically implies that the time indication is constructed in layers, whereby every hand lies in another plane to avoid intersections between the hands.

Consequently the hands cover each other in certain positions or may cover other information such as date information.

Also in the event the timepiece is equipped with additional functions, such as a chronometer, 24-hour indication, position of the moon, operating reserve indication and the like, said functions are inevitably temporarily covered completely or partially such that their reading in such position is made difficult or even prevented.

The second lesser known category has the advantage that the rings or disks do not cover each other, at least not when situated in the same plane.

However, intrinsic disadvantages of this category are that if the user wants to read the time, they are obliged to read the digits attentively to know what the time is. In addition, the digits are limited in size due to the geometric structure in rings. The poor reading ergonomics of said category are an important explanation for its low market share.

A dial module as specified in BE1019110 is also known, with a dial that is constructed from various parts, i.e. a primary disk with a primary concentric ring, whereby there are one or several openings in the disk, whereby in every opening a secondary disk with secondary concentric ring is applied.

Said disks form hands and are provided with a hand symbol to this end. Said concentric rings then form the dial and to this end contain scale indications in the form of digits, numbers, dashes, dots and the like. This can be turned around too of course.

The disks are rotatable relative to the corresponding concentric ring, whereby the secondary disks and the secondary rings are movable relative to the primary disk and whereby the orientation of the primary ring and the secondary ring relative to the housing are fixed.

To regulate the rotation of the disks and the rings relative to each other, shafts, bearings and gearwheels are provided to correctly connect the different components to each other and let them move relative to each other.

An advantage of such dial module is that the hands do not overlap and that the upper visible part of the dial module is executed according to a continuous plane or curved surface whereby the hands and the dials are situated in one continuous surface or in the plane of the curved surface. The hands will never overlap either such that an unimpeded reading of the time and other information is possible at all times and under all circumstances.

A disadvantage of such known dial module is that the mechanism of the different shafts and gearwheels is a complex mechanism that must be assembled with great precision involving numerous operations.

Furthermore, the mechanism must be constructed in different layers, making the mechanism relatively thick, such that the instrument or device in which the dial module is applied or incorporated, such as a wrist watch, also becomes more sizable.

In addition, when constructing or designing the mechanism all kinds of play and tolerances must be taken into account, such that as a consequence of the presence of the shafts, a minimal play on a short shaft has a major impact on the edges of the disks and rings.

As a consequence there must be a certain play between the disks and rings situated in the same plane to accommodate said tolerances such that the disks and rings can be prevented from coming into contact with each other during the operation of the dial module.

The purpose of the present invention is to provide a solution to at least one of the aforementioned and other disadvantages.

The object of the present invention is a dial module comprising a dial that is constructed from a primary disk with a primary concentric ring, whereby at least one opening is applied in the primary disk, whereby in at least one opening a secondary disk with secondary concentric ring is applied, whereby the disks serve as hands and the rings are provided with a scale indication at a front side or vice versa, whereby the front side of the disks and rings are situated in one continuous surface, **with the characteristic that** the outer edges of the disks, the inner edge of the primary ring, the inner and outer edge of the secondary rings and the edge of the opening in the primary disk serve as outer rings and/or inner rings of bearings, whereby said outer edges of the disks, inner edge of the primary ring, inner and outer edge of the secondary ring and edge of the opening in the primary disk are provided to this end with a groove and whereby small balls are applied between the rings and disks on the level of the grooves, whereby said grooves are filled with small balls and whereby the dimensions of the small balls and said grooves are such that the space between edges of the rings and disks is less than 0.05 millimetres.

Front side refers to the side of the dial module on which the information to be read is visible.

'Vice versa' is understood to mean that either the disks serve as hands, whereby the rings are provided with a scale indication, or that the rings serve as hands, whereby the disks are provided with a scale indication.

Said grooves in the edges of the disks and rings in pairs will form a space for the small balls and form a bearing as it were.

For example: the groove in the inner edge of the primary ring and the groove in the outer edge of the primary disk form a space for the small balls. The inner edge of the primary ring then forms the outer ring of the thus formed bearing, whereby the outer edge of the primary disk then forms the inner ring of the bearing and the small balls the ball bearings.

This provides the advantage that by providing the bearing in the disks and rings themselves, it is no longer necessary to work with physical shafts and separate bearings.

This has as a consequence that the dial module according to the invention can be made thinner than the known dial modules.

Indeed, for classic wrist watches for example, different layers are needed to be able to construct the shafts, bearings and gearwheels of the watch mechanism so as to achieve the desired movement.

Because this is no longer necessary for the invention, this will allow thinner (wrist) watches to be made for example and consequently the space required for incorporating the dial module in instruments or devices will be smaller compared to the known dial modules.

As no shafts need to be provided, the play on the different components will be far more limited as there are no big levers. Consequently, the distance between the disks and rings can be kept very minimal, in the order of magnitude of a couple of hundredths of a millimetre.

In other words there will be much less play on the disks and rings by using the small balls which in combination with said grooves form bearings.

Indeed, there is no longer any risk that the disks and rings come into contact with each other due to play of the mechanism, because the small balls in the grooves physically prevent them from coming into contact.

This is unlike the current solutions, whereby a minimum play of the present shafts driving the disks and rings produce a relatively big displacement on the ends or edges of the disks and rings.

Furthermore, the disks and the rings will be perfectly aligned relative to each other in one surface, due to the use of the balls.

Indeed, because the small balls are enclosed in the grooves of the outer edges and/or inner edges of the disks and rings with a very restricted play and extremely fine tolerance, said balls will keep the disks and rings in the same continuous surface as it were.

Said continuous surface can be a flat surface or a curved surface.

Also the fact that there are no levers, as explained above, will contribute to the fact that disks and rings of the dial module can extend in a perfectly flat surface, compared to the known dial modules for which this is not possible.

In addition, the dial module will also be very shock-resistant due to the fact that the grooves are filled with small balls.

Preferably, the groove is filled to the maximum extent with small balls. This means that no extra small balls fit in.

The groove may also be filled to less than its maximum extent.

In this way the groove may also be filled 50%, meaning that half, or approximately half of the maximum number of small balls, is applied in the groove.

However, at least 3 small balls, for example 12 small balls, are always present in the groove which are spread uniformly over the groove.

With a very large quantity of small balls, any shocks or forces to which the dial module is exposed will be distributed over all said small balls such that the dial module is more resistant against said influences compared to classic dial modules.

Furthermore, consequently the module will also be more pressure-resistant, as a pressure exerted on the dial module is distributed over the many small balls.

Because the space between the edges of the rings and disks is less than 0.05 millimetres, the space between the edges of the rings and disks will thus not, or barely, be visible to the naked eye.

In other words, there is a seemingly split-line-free surface, whereby the dial appears as one whole to the naked eye.

This not only results in a nice, elegant and aesthetic appearance, but will also ensure that any dust, dirt or other contaminants cannot end up between the different components of the dial.

This is possible thanks to the extremely fine tolerance of the balls, as explained above.

Preferably, the space between the edges of the rings and disks is less than 0.02 millimetres and even more preferably said space amounts to only 0.01 millimetres.

According to a preferred characteristic of the invention the dial module is provided with a mechanism for driving the primary disk and ring and the secondary disk and ring, whereby said mechanism comprises one or several gear transmissions with gearwheels and/or gearwheel rings which are directly connected to one or more of the primary and secondary disks and concentric rings.

The mechanism can be constructed without having to provide physical shafts, as is necessary for the classic watch mechanism to correctly connect and assemble the separate bearings and gearwheels to each other.

Consequently there are no levers either as is the case in the classic watch mechanism.

Constructively, this makes the mechanism much more stable and secure in terms of operation.

There will of course still be geometric axes around which the rotation movement of the disks and rings will occur, however said geometric axes will not represent a physical shaft and thus will be completely 'virtual' axes.

In a practical embodiment, the secondary disk is provided with a window or opening and extra functionalities are provided on the underside of the secondary disk which show data that can be observed through the window.

Said extra functionalities may comprise a second time zone, a temperature measurement, date indication and the like.

Indeed, as explained above, because no physical shafts need to be provided in the mechanism, and gearwheel rings can be used, the underside of the secondary disk can be kept free such that space is created to incorporate said extra functionality.

This has the additional advantage that no second, third, etc. secondary disk with associated secondary ring needs to be provided. In other words, more functionalities can be incorporated into the dial module.

Preferably, the small balls are spherical stones, whereby the stones are rubies, for example.

Such ruby stones can be manufactured with a precision of two microns (2 µm).

Said very accurate precision contributes to a minimum play of the mechanism, with the advantages explained above.

As explained above, said grooves in the edges of the disks and rings in pairs, together with the small balls, form a bearing as it were.

In a preferred embodiment, a spacer for the small balls is applied in a groove which serves as a bearing cage.

More specifically, for each formed bearing, a spacer will be provided for the small balls.

In a preferred embodiment, the dial module is lubricant-free.

This means no lubricant such as oil is present in the dial module or in the drive.

Indeed, the balls applied in the dial module according to the invention do not need lubricating, unlike traditional stone bearings, such that less maintenance is required.

The invention also relates to an instrument equipped with a dial module according to the invention.

Said instrument can be not only a wrist watch, watch or clock, but also a dashboard of a car or vehicle or another instrument reading type or the like.

Indeed, the applications of the dial module are many thanks to its limited thickness and the minimal play with associated advantages. Each application where varying information must be read, such as, for example, but not limited to, time, temperature, speed, atmospheric humidity, date, etc. is suitable for application of the dial module according to the invention.

Preferably, in such instruments the dial module is not covered by a glass plate or the like. In other words a glass-free watch can be made, precisely because the dial module according to the invention is so robust and strong.

Indeed, even if the dial module were pressed down inadvertently, this would not have any further effect on the dial module and the dial module would also not deform or the like.

An advantage of this is that no reflection can occur, which may jeopardise or affect the correct reading of the dial module.

Preferably, the instrument is provided with a housing that is open to the environment.

This means that the housing is not closed, and that dust, dirt, fluids, water and the like, but also other effects such as vibrations, pressure and the like can affect the dial module.

Due to the construction of a dial module according to the invention it is perfectly possible for the housing not to be made hermetically sealed or even to be omitted altogether.

With the intention of better showing the characteristics of the invention, a few preferred embodiments of a dial module according to the invention and an instrument equipped therewith are described by way of an example without any limiting nature, with reference to the accompanying drawings, wherein:
figure 1 schematically shows the front side of a dial module according to the invention;
figure 2 schematically shows a cross-section according to line II-II in figure 1;
figure 3 schematically shows the dial module of figure 1, but in another position.

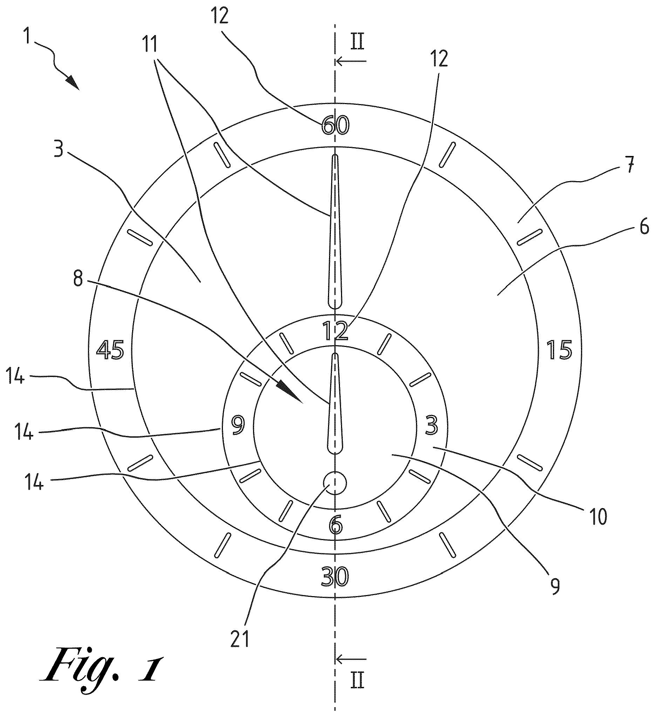

Figure 1 schematically shows a dial module 1 according to the invention.

More specifically the front side 2 of the dial module 1 is shown.

The dial module 1 essentially comprises a dial 3.

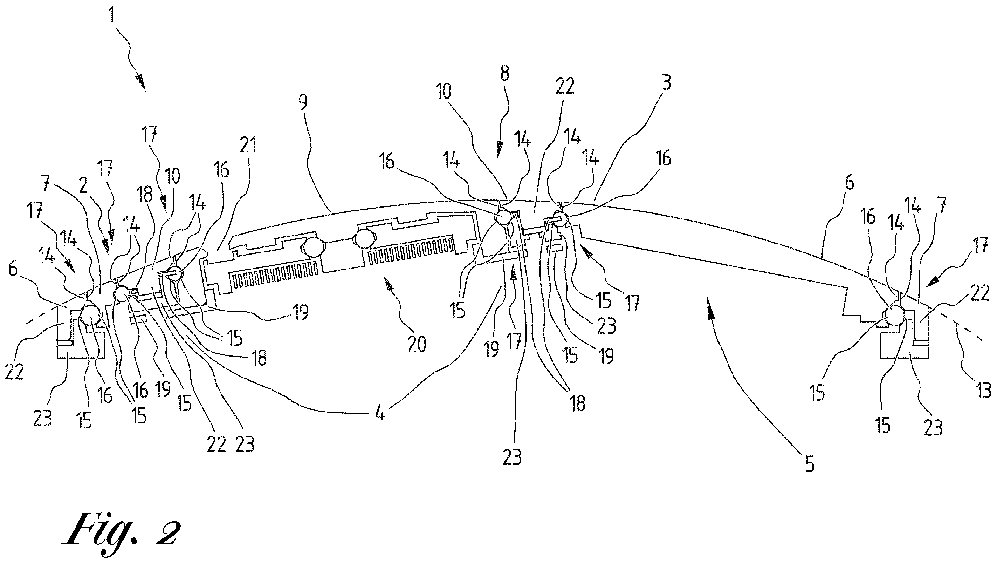

In addition, the dial module 1 also comprises a mechanism 4 for the drive which is visible on the cross-section in figure 2 and which is located completely on the back 5 of the dial 1.

Said dial 1 can be incorporated in a housing, for example the housing of a wrist watch or the speedometer in a dashboard of a vehicle.

The dial 1 is constructed from a number of components 6, 7, 9, 10 which together form the dial 1.

First, there is a primary disk 6 with a primary concentric ring 7.

Concentric is understood to mean that the centre of the ring 7 coincides with the centre of the disk 6.

In this case said centres also lie on the rotation axes of the disk 6 and the ring 7 or, in other words, the disk 6 and the ring 7 rotate around their centre in the surface of the dial.

A number of openings 8 are provided in the primary disk 6. In this case there is one opening 8 in figure 1.

A secondary disk 9 with concentric ring 10 is applied in said opening 8.

The terms 'primary' and 'secondary' are solely used here to be able to make a distinction between the different disks and rings, but for the rest have no further relevance or meaning.

It is understood that the primary disk 6 can be provided with several openings 8, for example two, three, four or more openings 8, whereby in each opening a secondary disk 9 with concentric secondary ring 10 is applied.

In the example shown the two disks 6 and 9 serve as hands.

To this end, the front sides 2 of said disks are provided with a hand indication 11 which can be used to point to certain information on the associated ring 7, 10 or which indicates certain information on the associated ring 7, 10.

Said hand indication 11 is an arrow or hand that is applied on the disk 6, 9.

Each associated ring 7, 10 is provided with a scale indication 12 on its front side 2. Said scale indication 12 must be interpreted very broadly and can be not only a time scale for minutes, hours or seconds, but also speeds, days of the week, months or weeks of the year, date and the like.

It is also possible that this is exactly the other way around, whereby the rings 7, 10 serve as hand and the disks are provided with the scale indication 6, 9.

But it is also possible that the primary disk 6 and the secondary ring 10 serve as hand and the primary ring 7 and the secondary disk 9 are provided with the scale indication 12.

The hand indications 11 on the disks 6, 9 will point as it were to an indication on the time scales 12 and in this way the information can be read.

As shown in figure 2, the front sides of the disks and rings lie in one continuous surface 13.

In the example shown in figure 2 this is a curved surface 13, but this could also be a flat surface.

According to the invention, the outer edges 14 of the primary disk 6 and secondary disk 9, the inner edge 14 of the primary ring 7, the inner and outer edge 14 of the secondary rings 10 and the edge 14 of the opening 8 in the primary disk 6 serve as outer rings and/or inner rings of bearings, whereby said outer edges 14 of the disks 6, 9, inner edge 14 of the primary ring 7, inner and outer edge 14 of the secondary ring 10 and edge 14 of the opening 8 in the primary disk 6 are provided to this end with a groove 15 and whereby small balls 16 are applied between the rings 7, 10 and disks 6, 9 on the level of the grooves 15.

As is visible in figure 2 in this way bearings 17 are formed as it were between the primary ring 7 and the primary disk 6, between the primary disk 6 and the secondary ring 10 and between the secondary ring 10 and the secondary disk 9.

Said small balls 16 serve as the ball bearings and preferably are spherical stones.

More specifically, preferably said stones are rubies.

The small ruby balls 16 can be manufactured with a precision of 2 micrometres (2µm).

The spherical stones can of course be manufactured from another material as well and the small balls 16 can of course also be manufactured from steel, for example, with a similar precision in terms of dimensions.

By working with the small balls 16 located in said grooves 15, the disks 6, 7 and rings 9, 10 will be automatically aligned as it were and be situated in the same surface 13, without requiring further adjustment or regulation. This simplifies and accelerates the assembly of the dial module 1.

Furthermore, play that must be regulated or adjusted like with classic watches with a mechanism with various gearwheels and shafts, no longer needs to be taken into account. During the assembly the components simply need to be screwed into each other, which will go faster compared to the classic systems and result in a better quality.

In this case a spacer 18 for small balls 16 is applied in the groove 1 which serves as a bearing cage.

Said spacer 18 will ensure that the small balls 16 are enclosed in the grooves 15 equidistantly.

Preferably, the dimensions of the small balls 16 and said grooves 15 are such that the space between the edges 14 of the rings 9, 10 and disks 6, 7 is not, or barely, visible to the naked eye.

As will be explained later, the play or space between the rings 9, 10 and disks 6, 7 can be very minimal, in the order of magnitude of hundredths of a millimetre, such that, together with the fact that their front side 2 is situated in the same surface 13, to the naked eye a dial 3 is formed from one piece or a whole.

In the example shown the dial module 1 is provided with a mechanism 4 for driving the primary disk 6 and/or primary ring 7 and the secondary disk 9 and secondary ring 10.

Drive in this case is understood to mean, for example, to let the different components 6,7,9,10 rotate relative to each other or relative to a housing in which the dial module 1 is incorporated.

In most cases either the primary disk 6 or the primary ring 7 is fixed relative to said housing.

This can be realised by allowing the primary ring 7 or primary disk 6 be a part of the housing of the dial module or having it integrally connected thereto.

The mechanism 4 is visible in figure 2 and comprises one or more gear transmissions with gearwheels 19 and/or gearwheel rings 19 that are directly connected to one or more of the primary and secondary disks 6, 9 and concentric rings 7, 10.

'Directly' is understood to mean that the gearwheels 19 and/or gearwheel rings 19 are not connected to the rings 7, 10 and disks 6, 9 via a physical shaft. Nor will there be any physical shafts to connect bearings 17 to gearwheels 19, gearwheel rings 19, rings 7, 10 or disks 6, 9 because the bearings 17 are integrated in the rings 7, 10 and disks 6, 9.

As shown in figure 2, no physical shafts are provided that are connected to the centres of the disks 6, 9 which are provided with bearings and/or gearwheels or additional auxiliary shafts with bearings and/or gearwheels.

In other words no levers are present in the mechanism 4 such as with the known watch mechanisms that are constructed from physical shafts, separate bearings and gearwheels.

Because the bearings 17 of the mechanism 4 are integrated as it were in the disks 6, 9 and rings 7, 10, because said play on the ruby small balls 16 only amounts to 2 µm and because there are no physical shafts which connect the disks 6, 9 and rings 7, 10 to gearwheels 19, gearwheel rings 19 and/or bearings 17, this means the play on the components 6,7,9,10 of the dial 3 is very minimal, such that the space between the different disks 6, 9 and rings 7, 10 can be kept very minimal.

Indeed, a play of a couple of hundredths of a millimetre is sufficient and enough to ensure that the disks 6, 9 and rings 7, 10 do not come into contact with each other during the operation of the mechanism 4.

Furthermore, the presence of the small balls 16 between the disks 6, 9 and rings 7, 10 ensures that they cannot come into contact with each other in any case, as the small balls 16 ensure a physical separation between the disks 6, 9 and rings 7, 10.

In addition a major advantage of the absence of the shafts with separate bearings is the fact that the position or orientation of the dial module 1 has no effect on the operation and in particular on the forces that occur during the operation of the dial module 1.

Indeed, in classic watch mechanisms, the orientation of the watch has an effect on the orientation of the shafts and bearings, such that the effect of gravity on the shafts and bearings will change as the orientation changes. This has an effect on the friction forces, among others, acting on the shafts and bearings. The changes in said friction forces will, albeit small, cause abnormalities in the operation of the mechanism 4 such that the watch will have to be adjusted again sooner.

A dial module according to the invention will always experience the same constant friction forces, irrespective of the orientation of the dial module and will furthermore be insensitive to gravity.

As said effect of gravity is eliminated, the dial module 1 according to the invention will work far more accurately and securely, with fewer abnormalities such that the dial module 1 does not, or barely, need adjusting or regulating.

Furthermore, the dial module 1 according to the invention will also be much less subject to shocks or thus be more shock-resistant than classic dial modules, precisely due to the absence of shafts.

Furthermore, more or less pressure on a disk or ring will not have any effect on a higher or lower friction, which is the case in a classic dial module with shafts.

Another additional advantage of the absence of physical shafts that connect the centre of the disks 6, 9 to bearings 17 and/or gearwheels 19 or gearwheel rings 19, is that the space under the disks 6,9 is free.

More specifically, for the secondary disk 9 this offers the possibility to add additional functionalities 20.

The example shown in figure 2 shows that the secondary disk 9 is provided with a window 21 or opening and that there is an extra functionality 20 on the underside 5 of the secondary disk 9 which shows data that can be observed through the window 21.

Said functionality 20 in figure 2 is a temperature sensor which can show the ambient temperature.

It is clear that different types of functionalities 20 can be provided, as described above.

Finally, preferably one or more of the primary or secondary rings 7, 10 or disks 6, 9 are constructed from at least two constituent parts 22, 23, whereby said constituent parts 22, 23 comprise at least the groove 15, such that before assembling the relevant disk 6, 9 or ring 7, 10 with the constituent parts 23, the groove 15 is partially opened to provide access for the small balls 16.

Said constituent parts 22, 23 are attached to each other by screws, bolts or the like.

More specifically in the example shown, the primary ring 7 is constructed from two constituent parts 22, 23, as well as the secondary ring 10.

It is possible hereby that the constituent parts 22, 23 are both ring-shaped, whereby the groove 15 is opened over its entire contour or that one constituent part 23 only relates to a section of a circle circumference, whereby the groove 15 thus is also partially free.

By manufacturing said components 7, 10 of the dial 1 from two constituent parts 22, 23, the mounting or assembly of the dial module 1 will be much easier.

Furthermore, the mechanism 4 will be much simpler to assemble in any case because no shafts or bearings need to be mounted and adjusted.

Indeed, after installing the spacers 18 and small balls 16 in the grooves 15, only the screws or bolts of the constituent parts 22, 23 of the rings 7, 10 need to be tightened and the gearwheels 19 and gearwheel rings 19 placed, but for the rest no further adjustment or setting of shafts or bearings is needed.

The operation of the dial module 1 is very simple and as follows.

During the operation of the dial module 1 the mechanism 4 will let the rings 7, 10 and disks 6, 9 rotate.

Here it needs to be noted that in the example of the figures, the primary ring 7, with the scale indication 12, will not move relative to the housing of the dial module 1.

The primary disk 6, which serves as a hand, will be able to move, more specifically rotate, relative to the housing. The rotation of the disk 6 causes the hand symbol 11 on the disk 6 to indicate certain information on the scale indication 12 of the ring 7. This is thus very similar to the hand of a traditional watch.

In addition, due to the rotation of the primary disk 6, the secondary ring 10 and secondary disk 9 will rotate along with it.

Preferably and in this case, the mechanism 4 is such that the secondary ring 10 is driven at the same rotational speed as the primary disk 6 but in the opposite direction, such that upon rotating, the secondary ring 10 always keeps one and the same fixed orientation relative to the dial module 1 or a housing of the dial module 1.

This has as a consequence that the scale indication 12 of the secondary ring 10 is always oriented the same, which will simplify the readability.

Note that if the secondary ring 10 serves as hand and the secondary disk 9 contains the scale indication 12, the mechanism 4 will be such that the secondary disk 9 is driven at the same rotational speed as the primary disk 7 but in the opposite direction, such that upon rotating the secondary disk 9 always keeps one and the same fixed orientation relative to the dial module 1 or a housing of the dial module 1.

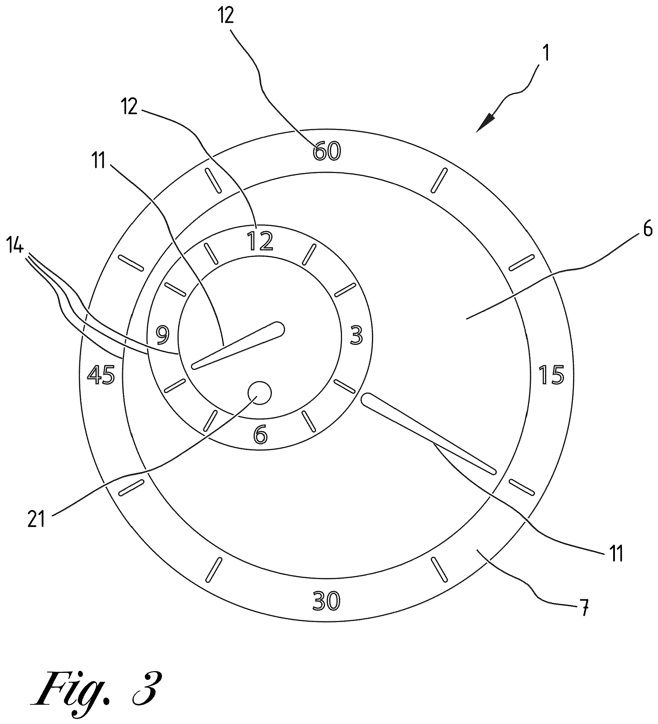

Figure 3 shows the dial module 1 of figure 1, whereby in this case the primary disk 6 is rotated, and whereby the secondary disk 9 is also rotated, such that both hand symbols 11 indicate other information on their respective scale indications 12.

The scale indication 12 on the secondary ring 10 is also rotated hereby, but such that the scale indication 12 is still located in the same orientation relative to the dial module 1 and the primary ring 7.

The present invention is by no means limited to the embodiments described as an example and shown in the drawings, but such dial module according to the invention and an instrument equipped therewith can be realised in all kinds of variants, without departing from the scope of the invention.

## Claims

1. Dial module comprising a dial (3) that is constructed from a primary disk (6) with a primary concentric ring (7), whereby in the primary disk (6) at least one opening (8) is applied, whereby in the at least one opening (8) a secondary disk (9) with secondary concentric ring (10) is applied, whereby the disks (6, 9) that serve as hands and the rings (7, 10) are provided with a scale indication (12) at a front side (2) or vice versa, whereby the front side (2) of the disks (6, 7) and rings (9, 10) is situated in one continuous surface (13), **characterised in that** the outer edges (14) of the disks (6, 9), the inner edge (14) of the primary ring (7), the inner and outer edge (14) of the secondary rings (10) and the edge (14) of the opening (8) in the primary disk (6) serve as outer rings and/or inner rings of bearings, whereby said outer edges (14) of the disks (6, 9), inner edge (14) of the primary ring (7), inner and outer edge (14) of the secondary ring (10) and edge (14) of the opening (8) of the primary disk (6) are provided to this end with a groove (15) and whereby small balls (16) are applied between the rings (7,10) and disks (6,9) on the level of the grooves (15), whereby said grooves (15) are filled with small balls (16) and whereby the dimensions of the small balls (16) and said grooves (15) are such that the space between edges (14) of the rings (7,10) and disks (6,9) is less than 0.05 millimetres.

2. Dial module according to claim 1, **characterised in that** the secondary disk (9) is provided with a window (21) or opening and that on the underside (5) of the secondary disk (9) extra functionalities (20) are provided which show data that can be observed through the window (21).

3. Dial module according to any one of the previous claims, **characterised in that** one or more of the primary or secondary rings (7,10) or disks (6,9) are constructed from at least two constituent parts (22, 23), whereby said constituent parts (22, 23) comprise at least the groove (15), all this such that before assembling the relevant disk (6,9) or ring (7,10) with the constituent parts (22, 23), the groove (15) is partially opened to provide access for the small balls (16).

4. Dial module according to any one of the previous claims, **characterised in that** the primary ring (7) or the primary disk (6) forms part of a housing of the dial module (1) or is integrally connected thereto.

5. Dial module according to any one of the previous claims, **characterised in that** the primary and secondary disk (6,9) serve as hand and are provided to this end with a hand symbol (11) at their front side (2), whereby the primary and secondary ring (7,10) are provided with a scale indication (12).

6. Dial module according to any one of the previous claims, **characterised in that** the primary disk (6) serves as a hand and is provided to this end with a hand symbol (11) at its front side (2) and that the secondary disk (9) or ring (10) is driven at the same rotational speed as the primary disk (6) but in the opposite direction, such that upon rotating, the secondary disk (9) or ring (10) always keeps one and the same fixed orientation relative to the dial module (1) or a housing of the dial module (1).

7. Dial module according to any one of the previous claims, **characterised in that** the primary disk (6) is provided with several openings (8), whereby in each opening (8) a secondary disk (9) with concentric secondary ring (10) is applied.

8. Dial module according to any one of the previous claims, **characterised in that** the dial module (1) is lubricant-free.

9. Dial module according to any one of the previous claims, **characterised in that** the dial module (1) always experiences the same friction forces, irrespective of the orientation of the dial module (1) and that it is insensitive to gravity.

10. Instrument with a dial module, **characterised in that** the dial module (1) is a dial module (1) according to any one of the previous claims.

11. Instrument according to claim 10, **characterised in that** the device is a watch, dashboard of a car or vehicle or another instrument reading type or the like.

12. Instrument according to claim 10 or 11, **characterised in that** the dial module (1) is not covered by a glass plate or the like.

13. Instrument according to claim 12, **characterised in that** the instrument is provided with a housing which is open to the environment.
